# EUROPEAN PATENT APPLICATION

(11) **EP 4 614 375 A1**
(43) Date of publication of application: **10.09.2025**
(21) Application number: 24305353.5
(22) Date of filing: 07.03.2024
(51) Int. Cl.: G06F 21/62, G16H 10/60, H04L 9/40, H04W 12/02, H04W 12/08, H04L 9/32

(54) **METHOD FOR SECURELY PROCESSING A GROUP OF DATA**

(71) Applicant: THALES DIS FRANCE SAS, 92190 Meudon (FR)
(72) Inventor: HUGOT, Didier, 92350 Le Plessis Robinson (FR); MARSEILLE, François-Xavier, 78160 Marly-le-Roi (FR); TRESSOL, Ludovic, 13350 Auriol (FR)
(74) Representative: Quintero Romero, Manuel

(57) **Abstract**

The present invention provides first method for securely processing a group of data within a runtime environment, wherein said first method comprises:
- requesting by an application host to a runtime environment attester device for an attestation report, said application host and said runtime environment attester being part of said runtime environment,
- sending back by said runtime environment attester device to said application host said attestation report,
- requesting by said application host a verifier device to verify said attestation report,
- receiving by said verifier device from said application host said request for verifying said attestation report,
- verifying by said verifier device said attestation report, said verifier device being part of a trusted environment,
- upon said verification, sending back by said verifier device to said application host a runtime proof token,
- receiving by said application host from said verifier device said runtime proof token,
- requesting by said application host to a data attester device a data attestation, said request comprising a group data identifier and said runtime proof token,
- receiving by said data attester device said request for a data attestation,
- assessing by said data attester device said runtime proof token,
- upon said assessment, acquiring by said data attester device a data attestation and sending it back to said application host,
- receiving by said application host from said data attester device said data attestation and verifying by said application host data constraints based on said data attestation,
- upon said verification, processing by said application host said group of data with an operation.

## Description

### TECHNICAL FIELD

The present invention relates to a first method for securely processing a group of data within a runtime environment.

### BACKGROUND OF THE INVENTION

Nowadays, in a fast-growing market of businesses running on public cloud infrastructures, it comes the need to ensure a high level of security, availability, data residency and more sovereignty. Deploying an application in a cloud environment requires to consider a global solution composed of:
- the application itself,
- a runtime environment on which the application is running (e.g., virtual machines, container orchestrator, serverless service),
- an environment (e.g., a cloud service provider, on-premises, hybrid),
- an ecosystem (e.g., interactions with end-users, and any kind of solutions and environments),
- a set of constraints (e.g., regionalization, high availability, security, sovereignty).

Some businesses come with strong requirements in terms of sovereignty, which evokes "data". Indeed, ensuring the sovereignty of the most sensitive data is about attesting, in a non-repudiable way, that these data are stored, processed, transferred, and even timely accessed only within a specific location such as a country territory. Sovereignty is often a requirement which is enforced to prevent data breaches, data exfiltration, comply with data protection and data transfer regulations.

One problem is that ensuring sovereignty of data is a challenge which is not easily addressed today. Sovereignty constraints are usually addressed at the environment level (e.g., cloud infrastructure locations). The problem is that data are not strongly bound to an environment but can be accessed, transferred, and processed to other environments. Another issue is that even when being processed in a sovereign environment, nothing can ensure that an unencrypted data will not be transferred outside of its sovereignty constraints.

### SUMMARY OF THE INVENTION

The present invention provides a solution for the aforementioned problems by a first method for securely processing a group of data within a runtime environment according to claim 1, a method for processing a group of data with an operation according to claim 11, a method for acquiring a data attestation for a group of data according to claim 14, and a method for verifying integrity of an application according to claim 15. In dependent claims, preferred embodiments of the invention are defined.

In a first inventive aspect, the invention provides a (first) method for securely processing a group of data within a runtime environment, wherein said method comprises:
- requesting by an application host to a runtime environment attester device for an attestation report, said application host and said runtime environment attester device being part of said runtime environment,
- sending back by said runtime environment attester device to said application host said attestation report,
- requesting by said application host a verifier device to verify said attestation report,
- receiving by said verifier device from said application host said request for verifying said attestation report,
- verifying by said verifier device said attestation report, said verifier device being part of a trusted environment,
- upon said verification, sending back by said verifier device to said application host a runtime proof token,
- receiving by said application host from said verifier device said runtime proof token,
- requesting by said application host a data attester device a data attestation, said request comprising a group data identifier and said runtime proof token,
- receiving by said data attester device said request for a data attestation,
- assessing by said data attester device said runtime proof token,
- upon said assessment, acquiring by said data attester device a data attestation and sending it back to said application host,
- receiving by said application host from said data attester device said data attestation and verifying by said application host data constraints based on said data attestation,
- upon said verification, processing by said application host said group of data with an operation.

According to non-limitative embodiments of the invention, the first method further comprises the following characteristics.

In a non-limitative embodiment, said step of requesting by said application host an attestation report comprises the sub-steps of:
- requesting by said application host said runtime environment attester device for a quote report,
- sending back by said runtime environment attester device to said application host said quote report,
- requesting by said application host said verifier device for a nonce,
- sending back by said verifier device to said application host said nonce,
- transmitting by said application host to said runtime environment attester device said nonce,
- signing by said runtime environment attester device said attestation report.

In a non-limitative embodiment, said data attestation comprises:
- a group data identifier,
- a data trust assurance level,
- a reference to a data ledger,
- a digital signature with a timestamp,
- data constraints.

In a non-limitative embodiment, the data registered in the data ledger are:
- operations performed on the group of data, and
- a group data identifier, and
- a data trust assurance level.

In a non-limitative embodiment, said step of acquiring by said data attester device said data attestation is performed by:
- retrieving said data attestation from a memory of said data attester device, or
- computing said data attestation based on a group data identifier, on an history of said group of data, and on a data trust assurance level.

In a non-limitative embodiment, said step of verifying by said application host data constraints comprises verifying the data trust assurance level.

In a non-limitative embodiment, said first method further comprises :
- requesting by said application host to said data attester device to update said data ledger for said group of data, said request comprising a transaction comprising information on said operation, on the last data attestation, on a new data attestation, and on metadata,
- updating by said data attester device said data ledger with said information, and
- acknowledging by said data attester device to said application host said update.

In a non-limitative embodiment, said metadata comprises ownership information and access control rules.

In a non-limitative embodiment, said operation is of the type:
- a CRUD operation, or
- an encryption operation, or
- a decryption operation, or
- a transfer operation, or
- a storage operation.

In a non-limitative embodiment, said group of data comprises one data or a plurality of data.

In a non-limitative embodiment, the computing of the data attestation comprises the request from the data attester device to an auditor device for an history of said group of data and for the corresponding data trust assurance level, said auditor device having the rights to access said data ledger.

In a second inventive aspect, the invention provides a (second) method for processing a group of data with an operation within a runtime environment, wherein said second method comprises:
- requesting by an application host a runtime environment attester device for an attestation report, said runtime environment attester device being part of said runtime environment,
- requesting by said application host a verifier device to verify said attestation report,
- receiving by said application host from said verifier device a runtime proof token,
- requesting by said application host a data attester device for a data attestation, said request comprising a group data identifier and said runtime proof token,
- receiving by said application host a data attestation from said data attester device after said runtime proof token has been assessed,
- verifying by said application host data constraints based on said data attestation,
- upon said verification, processing by said application host said group of data with said operation.

In a non-limitative embodiment, said step of requesting an attestation report comprises the sub-steps of:
- requesting by said application host said runtime environment attester device for a quote report,
- receiving back by said application host said quote report,
- requesting by said application host said verifier device for a nonce,
- receiving back by said application host said nonce, and
- transmitting by said application host to said runtime environment attester device said nonce.

In a non-limitative embodiment, said second method further comprises:
- requesting by said application host to said data attester device to update said data ledger for said group of data, said request comprising a transaction comprising information on said operation, on the last data attestation, on a new data attestation, and on metadata.

In a third inventive aspect, the invention provides a (third) method for acquiring a data attestation for a group of data, said third method comprising :
- receiving by a data attester device from an application host a request for a data attestation, said request comprising a group data identifier and a runtime proof token,
- assessing by said data attester device said runtime proof token,
- upon said assessment, acquiring by said data attester device a data attestation,
- sending back by said data attester device to the application host said data attestation.

In a fourth inventive aspect, the invention provides a (fourth) method for verifying integrity of an application, said fourth method comprising:
- receiving by a verifier device from an application host a request for verifying an attestation report,
- verifying by said verifier device said attestation report,
- upon said verification, sending back by said verifier device to said application host a runtime proof token.

All the features described in this specification (including the claims, description, and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic organization chart of a first method for securely process a group of data according to a non-limitative embodiment of the invention.
- Figure 2: This figure shows a schematic organization chart of sub-steps performed during a requesting step of an attestation report of the first method of figure 1, according to a non-limitative embodiment.
- Figure 3: This figure shows a data attestation acquired during a step of the first method of figure 1, according to a non-limitative embodiment.
- Figure 4: This figure shows a data ledger comprising data on which a data attestation is based during a step of the first method of figure 1, according to a non-limitative embodiment.
- Figure 5: This figure shows a schematic diagram of different non-limitative of embodiments for acquiring a data attestation during a step of the first method of figure 1, according to a non-limitative embodiment.
- Figure 6: This figure shows a schematic organization chart of the first method of figure 1, said first method comprising further supplementary steps, according to a non-limitative embodiment.
- Figure 7: This figure shows a non-limitative embodiment of a system comprising an application host, a verifier device, a runtime environment attester device, and a data attester device, said system being configured to performed said first method of figures 1, 2, 5 and 6.
- Figure 8: This figure shows a schematic organization chart of a second method, according to a non-limitative embodiment, for securely processing a group of data with an operation, said second method being performed by the application host of figure 7.
- Figure 9: This figure shows a schematic organization chart of a third method, according to a non-limitative embodiment, for acquiring a data attestation for a group of data, said third method being performed by the data attester device of figure 7.
- Figure 10: This figure shows a schematic organization chart of a fourth method, according to a non-limitative embodiment, for verifying integrity of an application, said fourth method being performed by the verifier device of figure 7.

### DETAILED DESCRIPTION OF THE INVENTION

As it will be appreciated by one skilled in the art, aspects of the present invention may be embodied as a first method for securely processing a group of data within a runtime environment, a second method for processing a group of data with an operation, a third method for acquiring a data attestation for a group of data, or a fourth method for verifying integrity of an application.

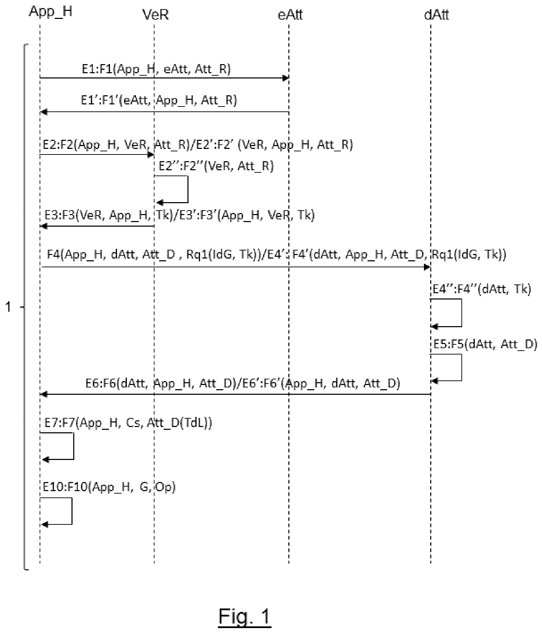

The present invention relates to a first method 1 for securely processing a group of data G, said first method 1 being described in reference to figures 1 to 7.

In order to simplify the figures, in the figures, an arrow originating from a sender and aiming at a receiver can show two steps at the same time: a sending step from a sender to a receiver and a receiving step by the receiver. In this case, the two steps are separated with a slash.

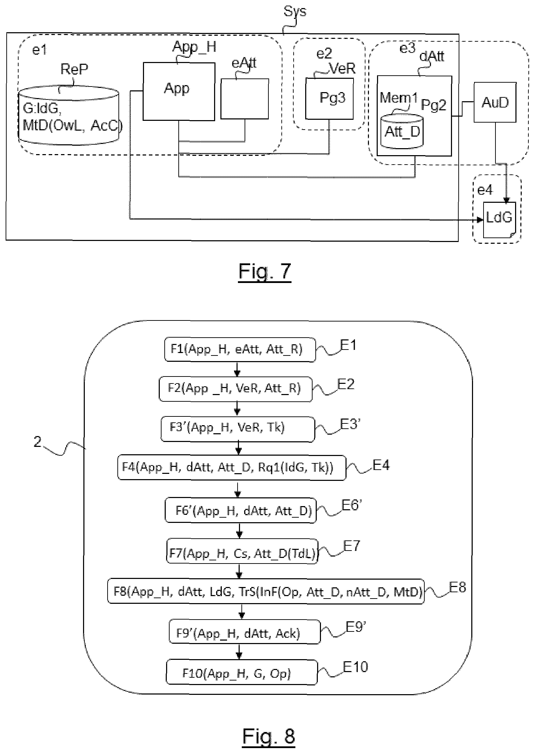

A group of data G illustrated in figure 7 comprises one or a plurality of data D. It is owned by a data owner. A group of data G has a corresponding group data identifier IdG and a corresponding set of metadata MtD such as in non-limitative examples ownership information OwL or access control rules AcC. The access control rules AcC are the rules defining how and by whom the group of data G can be accessed.

The group of data G is saved in a data repository ReP.

An application host App_H is configured to process the group of data G with an operation Op. An operation Op is of the type of:
- a CRUD operation: CRUD for Create, Read, Update, Delete, or
- an encryption operation Op.2, or
- a decryption operation Op.3, or
- a transfer operation Op.4, or
- a storage operation Op.5.

In non-limitative examples, the application host App_H is a personal computer or a server or a device of a cloud. The application host App_H is part of a runtime environment e1. It comprises an application App that runs in the runtime environment e1. In a non-limitative example, the runtime environment e1 is a service provider environment, such as a cloud.

The data repository ReP is in the same runtime environment e1 than the application host App_H, or in a different environment. In the non-limitative example illustrated figure 7, it is in the same runtime environment e1.

When processing a group of data G, data sovereignty is to be considered. When looking at the data sovereignty, different criteria are to be considered as follows:
a) - Data ownership: A data owner, also called owner, has the right to determine how his/her/its data are collected, processed, and used. The data owner also has the right to control who has access to the data and under which conditions.
b) - Data location: Data sovereignty can be influenced by where data is stored or processed. Some countries require that certain types of data must be stored within their borders to be subject to their laws.
c) - Data security: Data sovereignty can be related to data security, as data owners may want to ensure that their data is protected against unauthorized access or use.
d) - Data privacy: Data sovereignty can be related to data privacy, as data owners may want to ensure that their data is collected, processed, and used in accordance with privacy laws and regulations.
e) - Data transfer: Data sovereignty can be influenced by the rules and regulations surrounding the transfer of data between countries or regions.
f) - Data access and control: Data sovereignty can be related to the ability of data owners to access and control their data, regardless of where it is stored or processed.

Thus, because of these different criteria, it is important to ensure data sovereignty to the data owner and not the environment of a service provider. It is done thanks to a data sovereignty attestation Att_D. When an application host App_H is processing a group of data D with an operation Op, it can verify its data attestation Att_D to ensure that the group of data G is safe, unchanged and sovereign proof.

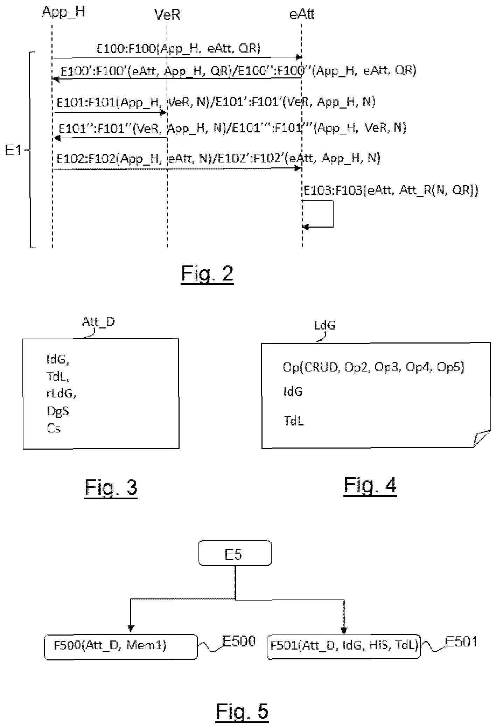

A data attestation Att_D is also called data sovereignty attestation Att_D. As illustrated in figure 3, the data attestation Att_D comprises:
- a group data identifier IdG,
- a data trust assurance level TdL,
- a reference to a data ledger rLdG,
- a digital signature with a timestamp DgS, and
- data constraints Cs also called sovereignty constraints Cs.

The data attestation Att_D permits to have an historical of the group of data G at rest (when it is stored), in transit (when it is transferred), and in use (when a CRUD operation is applied). This historical permits to confirm or to invalidate a sovereignty constraints Cs and who has been accessed to the data. It is to be noted that data constraints Cs relate to how the group of data G is protected and in which environment.

In non-limitative examples, some data constraints Cs can be: only read operation, or only read and update operation, i.e. no transfer, a storage in a specific country only, etc. The data constraints Cs are set up by the data owner of the group of data G.

It is to be noted that a digital signature with a timestamp is used to trust the entity which generates the digital signature. It ensures integrity and non-repudiation. Hence, the timestamp permits to know when the data attestation Att_D has been issued and to measure its level of obsolescence.

The first method 1 ensures that:
- a group of data G is processed by an operation Op in a genuine environment, aka the runtime environment e1 of the application App,
- a group of data G is processed by an authorized operation Op.

A system Sys illustrated in figure 7 is configured to perform the first method 1. The system Sys comprises the application host App_H itself, a verifier device VeR, a data attester device dAtt, and a runtime environment attester device eAtt. In the following, the verifier device VeR is also called verifier VeR, the data attester device dAtt is also called data attester dAtt, and the runtime environment attester device eAtt is also called runtime environment attester eAtt.

The verifier device VeR is a trusted third-party, also called a sovereignty runtime verifier. It is configured to:
- attest that the application App is running on a genuine hardware, thus it verifies the integrity of the application App. It is not part of the same environment as the runtime environment e1 of the application host App_H, but is part of a different environment which is a trusted environment e2. In non-limitative examples the verifier device VeR is a firm server, a trusted third-party server, a device of another cloud's provider, etc.

The runtime environment attester device eAtt is configured to sign an attestation report Att_R also called runtime environment attestation Att_R. The runtime environment attester device eAtt is part of the same runtime environment e1 as the application host App_H. In a non-limitative example, the runtime environment attester device eAtt is a server of a cloud service provider.

The data attester dAtt device is configured to:
- assess the data trust assurance level TdL, and
- acquire the data attestation Att_D, and
- allow auditors AuD to audit data conformance.

The data attester device dAtt is part of a third environment e3 different from the runtime environment e1 and from the trusted environment e2. In a non-limitative example, the data attester device dAtt is a server.

The data trust assurance level TdL is set to low, medium or high. It permits to qualify the level of trust for the group of data G, when it has been throughout the lifecycle of the group of data G. The data trust assurance level TdL is updated each time a new data attestation Att_D is computed.

Audit data conformance is also called data sovereignty conformance. In a non-limitative embodiment, the auditor device AuD is part of the third environment e3. In the following, the auditor device AuD is also called auditor AuD. In non-limitative examples, the auditor device AuD is a certification laboratory server, or a state service server. The auditor device AuD is configured to:
- access to a data ledger LdG: it has the rights to access it, and
- analyze the data trust assurance level TdL.

The data ledger LdG is a data lifecycle immutable log.

Once a data is created in the data ledger LdG, it cannot be deleted.

As illustrated in figure 4, the data registered in the data ledger LdG are:
- all operations Op performed on the group of data G (storage, encryption, transfer, CRUD operations), and
- a group data identifier IdG, and
- a data trust assurance level TdL.

The data ledger LdG is accessible by:
- the application host App_H that can update it,
- the auditor device AuD that can read it.

The data ledger LdG is registered in a fourth environment e4 as illustrated in figure 7. It can be shared or not. When it is shared, it can be updated by the data owner. In a non-limitative example, a data ledger LdG of certificates used for the internet can be shared.

Hence, the data ledger LdG is used to:
- attest real-time data sovereignty based on the current context (location, data type...), and
- attest lifetime data sovereignty based taking into account the list of all the operations Op performed on the group of data G, and
- perform audits for example for regulations compliance, and
- as a proof of sovereignty, and
- raise alert if the sovereignty of data has been compromised.

The type of applications that leverage data sovereignty attestation Att_D are in non-limitative examples:
- business applications,
- technical services such as a Key Management Service to centralize and secure the key management,
- Development tools such as CI (continuous Integration)/CD (Continuous Deployment) pipelines.

Hence, the type of data D concerned by the data attestation Att_D are:
- business data,
- technical data, such as in a non-limitative example logs,
- security data, such as in a non-limitative example encryption keys.

As illustrated in figure 1, the first method 1 comprises the following steps.

In step E1 illustrated F1(App_H, eAtt, Att_R), the application host App_H requests the runtime environment attester eAtt for an attestation report Att_R. The step E1 comprises the following sub-steps as illustrated in figure 2.

In sub-step E100 illustrated F100(App_H, eAtt, QR), the application host App_H requests the runtime environment attester eAtt for a quote report QR, this latter sending back in sub-step E100' illustrated F100'(eAtt, App_H, QR) said quote report QR to said application host App_H which receives it in sub-step E100" illustrated F100"(App_H, eAtt, QR).

In sub-step E101 illustrated F101(App_H, VeR, N), the application host App_H requests the verifier VeR for a nonce N.

In sub-step E101' illustrated F101'(VeR, App_H, N), the verifier VeR receives from the application host App_H said request for a nonce N.

In sub-step E101" illustrated F101 "(VeR, App_H, N) the verifier VeR sends back said nonce N to said application host App_H which receives it in sub-step E101‴ illustrated F101‴(App_H, VeR, N).

It is to be noted that the quote report QR is the same for a given application App. Each time, one needs the quote report QR, one assigns it a nonce N in order to avoid a third party to retrieve and use fraudulently the quote report QR. Hence, the attestation report Att_R comprises the quote report QR and a nonce N.

In sub-step E102 illustrated F102(App_H, eAtt, N), the application host App_H transmits to the runtime environment attester eAtt said nonce N, this latter receives said nonce N in sub-step E102' illustrated F102'(eAtt, App_H, N).

In sub-step E103 illustrated F103(eAtt, Att_R(N, QR)), the runtime environment attester eAtt signs said attestation report Att_R which comprises the quote report QR and the nonce N. It signs it with a certificated that is known by the verifier VeR as well.

In step E1' illustrated F1'(eAtt, App_H, Att_R), the runtime environment attester eAtt sends back the attestation report Att_R to said application host App_H.

In step E2 illustrated F2(App_H, VeR, Att_R) the application host App_H requests the verifier VeR to verify said attestation report Att_R.

In step E2' illustrated F2'(VeR, App_H, Att_R) the verifier VeR receives said request from the application host App_H. In step E2" illustrated F2"(VeR, Att_R), the verifier VeR verifies said attestation report Att_R with said nonce N.

Upon verification, if the verification is successful, in step E3 illustrated F3(VeR, App_H, Tk), the verifier VeR sends back to the application host App_H a runtime proof token Tk. The existence of the runtime proof token Tk permits to acknowledge that the verification of the attestation report Att_R has been performed. It means that the application App has not been modified by a malevolent third party.

In step E3' illustrated F3'(App_H, VeR, Tk), the application host App_H receives the runtime proof token Tk sent by the verifier VeR.

In step E4 illustrated F4(App_H, dAtt, Att_D, Rq1(ldG, Tk)), the application host App_H requests the data attester dAtt for a data attestation Att_D, said request Rq1 comprising the group data identifier IdG and said a runtime proof token Tk. Hence, the application host App_H requests the data attestation Att_D by sending the group data identifier IdG of the group of data G and the runtime prof token Tk that has been generated by said verifier VeR.

In step E4' illustrated F4'(dAtt, App_H, Att_D, Rq1 (IdG, Tk)), the data attester dAtt receives said request Rq1 for a data attestation Att_D from the application host App_H.

In step E4" illustrated F4"(dAtt, Tk), the data attester dAtt assesses the proof token Tk. The verification of the runtime proof token Tk permits to confirm that the runtime environment e1 is a trusted environment. As well-known by the man skilled in the art, the verification of the proof token Tk consists in verifying the signature contained in it and its coherency (through a validity time in a non-limitative example). Hence, the data attester dAtt will give the data attestation Att_D only if the runtime environment e1 is a trusted one.

In step E5 illustrated F5(dAtt, Att_D), the data attester dAtt acquires the data attestation Att_D.

In non-limitative embodiments, as illustrated in figure 5, the acquisition of the data attestation Att_D is performed by:
- E500 illustrated F500(Att_D, Mem1): retrieving said data attestation Att_D from a memory Mem1 (illustrated in figure 7) of said data attester dAtt, or
- E501 illustrated F501(Att_D, IdG, HiS, TdL): computing said data attestation Att_D based on the group data identifier IdG, on an history HiS of said group of data G, and on the data trust assurance level TdL. The history HiS comprises in particular the former operations Op performed on said group of data G. In a non-limitative example, a hash is computed with all these data and signed with a secret key.

It is to be noted that step 500 permits to directly send back the data attestation Att_D when it was already computed and cached instead of recomputing it each time.

In a non-limitative embodiment, the computing of the data attestation Att_D comprises the request from the data attester dAtt to the auditor AuD for the history HiS of said group of data G and for the corresponding data trust assurance level TdL, said auditor AuD having the rights to access said data ledger LdG.

In step E6 illustrated F6(dAtt, App_H, Att_D), the data attester dAtt sends back to the application host App_H the data attestation Att_D, said application host App_H receiving said data attestation Att_D in step E6' illustrated F6'(App_H, dAtt, Att_D).

In step E7 illustrated F7(App_H, Cs, Att_D(TdL)), the application host App_H verifies data constraints Cs based on said data attestation Att_D.

As the data attestation Att_D comprises the data trust assurance level TdL, in a non-limitative embodiment, said verification comprises the verifying of the data trust assurance level TdL of said data attestation Att_D. If the data trust assurance level TdL doesn't correspond to the one of the application App, then the operation Op to be applied on the group of data G is discarded.

It is to be noted that a data attestation Att_D is associated to a group of data G and is updated each time an operation Op is applied on the group of data G. With the data attestation Att_D, one checks that the group of data G preserves during all its life its data constraints Cs. Hence, one checks that the group of data G always complies with the data constraints Cs.

Upon said verification of the data attestation Att_D, that is to say when said verification is successful, in step E10 illustrated F10 (App_H, G, Op), the application host App_H processes the group of data G with the operation Op. To this end, the application host App_H gets the group of data G from the data repository ReP via the group data identifier IdG and processes the group of data G with the operation Op.

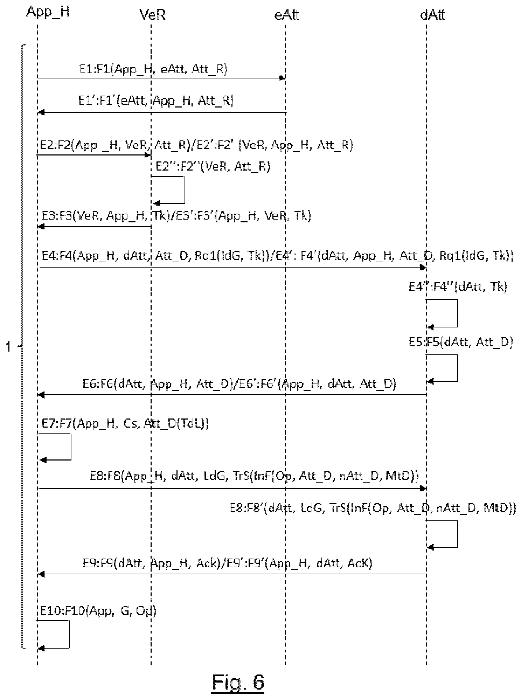

In a non-limitative embodiment, the first method 1 further comprises the following steps as illustrated in figure 6.

In step E8 illustrated F8(App_H, dAtt, LdG, TrS(InF(Op, Att_D, nAtt_D, MtD), the application host App_H requests the data attester dAtt to update the data ledger LdG for said group of data G.

To this end, it sends the group data identifier IdG and a transaction TrS. In a non-limitative embodiment, the transaction TrS comprises information InF on:
- the operation Op to be performed on the group of data G,
- the last data attestation Att_D,
- a new data attestation nAtt_D, and
- metadata MtD.

In step E8' illustrated F8'(dAtt, LdG, TrS(lnf(Op, nAtt_D, MtD)), the data attester dAtt update the data ledger LdG for said group of data G.

The data ledger LdG is updated with the transaction T for the group of data G identified with the group data identifier IdG. Thus, there is always a track in particular of the operation Op performed on the group of data G. The owner of the group of data G is hence aware of it.

In a non-limitative embodiment, the new data attestation nAtt_D is computed based on the group data identifier IdG, on the history HiS of the group of data G, and on the data trust assurance level TdL.

In step E9 illustrated F9(dAtt, App_H, Ack), the data attester dAtt acknowledges the application host App_H of this update by sending an acknowledge message Ack, said acknowledge message Ack being received by the application host App_H in step E9' illustrated F9'(App_H, dAtt, Ack).

When the data ledger LdG is updated, the application host App_H processes the group of data G with the operation Op as illustrated in step E10.

Hence, the application host App_H is configured to perform a second method 2 for processing a group of data G with an operation Op, said second method 2 being illustrated in figure 8. The second method 2 is a computer-implemented method.

The second method 2 comprises some of the steps of the first method 1 which are as illustrated in figure 8:
- the step E1 illustrated F1(App_H, eAtt, Att_R), where the application host App_H requests to the runtime environment attester eAtt for an attestation report Att_R ;
- the step E2 illustrated F2(App_H, VeR, Att_R), where the application host App_H requests the verifier VeR to verify said attestation report Att_R ;
- the step E3' illustrated F3'(App_H, VeR, Tk), where the application host App_H receives the runtime proof token Tk sent by the verifier VeR after said attestation report Att_R has been verified ;
- the step E4 illustrated F4(App_H, dAtt, Att_D, Rq1 (IdG, Tk), where the application host App_H requests the data attester dAtt for a data attestation Att_D said request comprising a group data identifier IdG and said a runtime proof token Tk;
- the step E6' illustrated F6'(App_H, dAtt, Att_D), where the application host App_H receives the data attestation Att_D sent by said data attester dAtt after said runtime proof token Tk has been assessed ;
- the step E7 illustrated F7(App_H, Cs, Att_D(TdL)), where the application host App_H verifies data constraints Cs based on said data attestation Att_D ; and
- the step E10 illustrated F10(App_H, G, Op), where the application host App_H processes the group of data G with an operation Op.

In a non-limitative embodiment, the step of requesting an attestation report Att_R comprises the sub-steps of:
- E100: requesting said runtime environment attester eAtt for a quote report QR,
- E100": receiving back said quote report QR,
- E101: requesting said verifier VeR for a nonce N,
- E101": receiving back said nonce N,
- E102: transmitting to said runtime environment attester eAtt said nonce N.

These sub-steps are the same as illustrated in figure 2.

In a non-limitative embodiment, the second method 2 further comprises the following steps as illustrated in figure 8:
- the step E8 illustrated F8(App_H, dAtt, LdG, TrS(InF(Op, nAtt_D, MtD), where the application host App_H requests the data attester dAtt to update the data ledger LdG for said group of data G ; and
- the step E9' illustrated F9'(App_H, dAtt, Ack), where the application host App_H receives acknowledge message Ack from the data attester dAtt indicating that the update of the data ledger LdG has been performed.

It is to be noted that the application App illustrated in figure 7 is a first computer program product. Said first computer program product App comprises a set of instructions, which when loaded into said computer, causes the computer to carry out the second method 2.

The first computer program product App can be embodied on a non-transitory computer readable storage medium (not illustrated) having a set of instructions stored therein, which when executed by a processor, cause the processor to perform the second method 2.

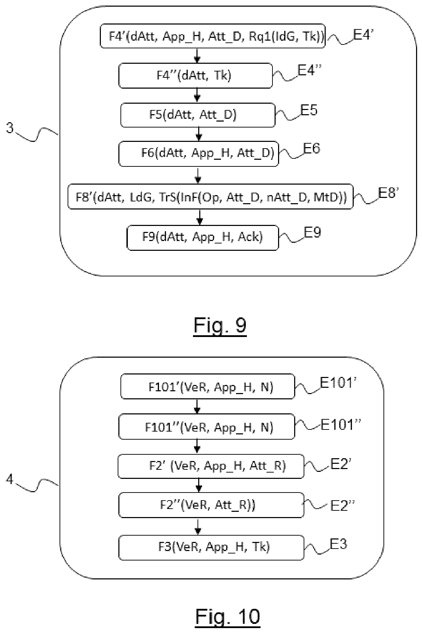

Hence, the data attester dAtt is configured to perform a third method 3 for acquiring a data attestation Att_D for a group of data G, said third method 3 being illustrated in figure 9. The third method 3 is a second computer-implemented method.

The third method 3 comprises some of the steps of the first method 1 which are as illustrated in figure 9:
- the step E4' illustrated F4'(dAtt, App_H, Att_D, Rq1(IdG, Tk)) where the data attester dAtt receives a request Rq1 for a data attestation Att_D from the application host App_H, said request Rq1 comprising the group data identifier IdG and said a runtime proof token Tk (runtime proof token Tk sent by the verifier VeR),
- the step E4" illustrated F4"(dAtt, Tk) where the data attester dAtt assesses the runtime proof token Tk,
- the step E5 illustrated F5(dAtt, Att_D) where upon said assessment, the data attester dAtt acquires a data attestation Att_D,
- the step E6 illustrated F6(dAtt, App_H, Att_D) where the data attester dAtt sends back to the application host App_H the data attestation Att_D.

In non-limitative embodiments, as illustrated in figure 5, the acquisition by the data attester dAtt of the data attestation Att_D is performed by:
- the step E500 illustrated F500(Att_D, Mem1) described before, or
- the step E501 illustrated F501(Att_D, IdG, HiS, TdL) described before.

In a non-limitative embodiment illustrated in figure 9, the third method 3 further comprises:
- the step E8' illustrated F8'(dAtt, LdG, TrS(lnf(Op, nAtt_D, MtD)) where the data attester dAtt updates the data ledger LdG for the group of data G as requested by the application host App_H,
- the step E9 illustrated F9(dAtt, App, Ack) where the data attester dAtt acknowledges the application host App_H of this update by sending an acknowledge message Ack.

It is to be noted that the data attester dAtt comprises a second computer program product Pg2 illustrated in figure 7. Said second computer program product Pg2 comprises a set of instructions, which when loaded into said computer, causes the computer to carry out the third method 3.

The second computer program product Pg2 can be embodied on a non-transitory computer readable storage medium (not illustrated) having a set of instructions stored therein, which when executed by a processor, cause the processor to perform the third method 3.

Hence, the verifier VeR is configured to perform a fourth method 4 for verifying integrity of the application App, said fourth method 4 being illustrated in figure 10. The fourth method 4 is a computer-implemented method.

The fourth method 4 comprises some of the steps of the first method 1 which are as illustrated in figure 10:
- the step E2' illustrated F2'(VeR, App_H, Att_R) where the verifier VeR receives a request from the application host App_H to verify an attestation report Att_R (that has been generated by the runtime environment attester eAtt),
- the step E2" illustrated F2"(VeR, Att_R) where the verifier VeR verifies said attestation report Att_R,
- the step E3 illustrated F3(VeR, App_H, Tk) where upon said verification, the verifier VeR sends back to the application host App_H a runtime proof token Tk.

As illustrated in figure 10, the fourth method 4 further comprises:
- the sub-step E101' illustrated F101'(VeR, App_H, N) where the verifier VeR receives from the application host App_H a request for a nonce N,
- the sub-step E101" illustrated F101"(VeR, App_H, N) where the verifier VeR sends back a nonce N to said application host App_H.

It is to be noted that the verifier VeR comprises a third computer program product Pg3 illustrated in figure 7. Said third computer program product Pg3 comprises a set of instructions, which when loaded into said computer, causes the computer to carry out the fourth method 4.

The third computer program product Pg3 can be embodied on a non-transitory computer readable storage medium (not illustrated) having a set of instructions stored therein, which when executed by a processor, cause the processor to perform the fourth method 4.

It is to be noted that a computer program product is also referred to as a program, software, software application, or code. A computer program product can be deployed in any form, including, but not limited to, as a stand-alone program, or as a module, component, subroutine, or other unit suitable for use in a computing environment.

In non-limitative embodiments, instructions also called program instructions, may be assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language.

In non-limitative embodiments, a non-transitory computer readable storage medium is an electronic storage device, a magnetic storage device, an optical storage device, an electromagnetic storage device, a semiconductor storage device, or any suitable combination of the foregoing. In non-limitative examples, the computer readable storage medium is a read-only memory ROM or the like such as PROM, an erasable programmable read-only memory EPROM or the like such as EEPROM, a Flash memory, a solid-state memory, a DVD, and the like.

It is to be understood that the present invention is not limited to the aforementioned embodiments and variations and modifications may be made without departing from the scope of the invention. All statements herein reciting principles, aspects, and embodiments of the invention, as well as specific examples thereof, are intended to encompass equivalents thereof. In this respect, the following remarks are made.

Hence, some embodiments of the invention may comprise one or a plurality of the following advantages:
- thanks to the runtime proof token Tk, it permits to ensure that the group of data G is always processed in a trusted runtime environment e1 and remains always encrypted in a non-sovereign attested environment,
- processing the group of data G in a trusted environment permits to ensure that the group of data cannot be accessed by third parties when being decrypted,
- it permits to ensure that the application App which executes the operation Op has not been modified by a malevolent third party,
- thanks to the data attestation Att_D, it permits the application host App_H when processing a group of data G to verify that the group of data G is safe, unchanged, and sovereign proof,
- it permits a trusted party to manage the data attester dAtt,
- it permits to the manager of the data ledger LdG to have a traceability of the group of data access,
- the group of data G is not anymore managed at the service provider level, it doesn't depend on the service provider security measures or of the service provider data traceability,
- it permits a data owner to keep control on its own data even in a cloud.

## Claims

1. First method (1) for securely processing a group of data (G) within a runtime environment (e1), wherein said method (1) comprises:
- requesting by an application host (App_H) to a runtime environment attester device (eAtt) for an attestation report (Att_R), said application host (App_H) and said runtime environment attester device (eAtt) being part of said runtime environment (e1),
- sending back by said runtime environment attester device (eAtt) to said application host (App_H) said attestation report (Att_R),
- requesting by said application host (App_H) a verifier device (VeR) to verify said attestation report (Att_R),
- receiving by said verifier device (VeR) from said application host (App_H) said request for verifying said attestation report (Att_R),
- verifying by said verifier device (VeR) said attestation report (Att_R), said verifier (VeR) being part of a trusted environment (e2),
- upon said verification, sending back by said verifier device (VeR) to said application host (App_H) a runtime proof token (Tk),
- receiving by said application host (App_H) from said verifier device (VeR) said runtime proof token (Tk),
- requesting by said application host (App_H) a data attester device (dAtt) a data attestation (Att_D), said request comprising a group data identifier (IdG) and said runtime proof token (Tk),
- receiving by said data attester device (dAtt) said request for a data attestation (Att_D),
- assessing by said data attester device (dAtt) said runtime proof token (Tk),
- upon said assessment, acquiring by said data attester device (dAtt) a data attestation (Att_D) and sending it back to said application host (App_H),
- receiving by said application host (App_H) from said data attester device (dAtt) said data attestation (Att_D) and verifying by said application host (App_H) data constraints (Cs) based on said data attestation (Att_D),
- upon said verification, processing by said application host (App_H) said group of data (G) with an operation (Op).

2. First method (1) according to claim 1, wherein said step of requesting by said application host (App_H) an attestation report (Att_R) comprises the sub-steps of :
- requesting by said application host (App_H) said runtime environment attester device (eAtt) for a quote report (QR),
- sending back by said runtime environment attester device (eAtt) to said application host (App_H) said quote report (QR),
- requesting by said application host (App_H) said verifier device (VeR) for a nonce (N),
- sending back by said verifier device (VeR) to said application host (App_H) said nonce (N),
- transmitting by said application host (App_H) to said runtime environment attester device (eAtt) said nonce (N),
- signing by said runtime environment attester device (eAtt) said attestation report (Att_R).

3. First method (1) according to any of the preceding claims, wherein said data attestation (Att_D) comprises:
- a group data identifier (IdG),
- a data trust assurance level (TdL),
- a reference to a data ledger (rLdG),
- a digital signature with a timestamp (DgS),
- data constraints (Cs).

4. First method (1) according to the preceding claim, wherein data registered in the data ledger (LdG) are:
- operations (Op) performed on the group of data (G), and
- a group data identifier (IdG), and
- a data trust assurance level (TdL).

5. First method (1) according to any of the preceding claims, wherein said step of acquiring by said data attester device (dAtt) said data attestation (Att_D) is performed by :
- retrieving said data attestation (Att_D) from a memory (Mem1) of said data attester device (dAtt), or
- computing said data attestation (Att_D) based on a group data identifier (IdG), on an history (HiS) of said group of data (G), and on a data trust assurance level (TdL).

6. First method (1) according to any of the preceding claims combined with claim 3, wherein said step of verifying by said application host (App_H) data constraints (Cs) comprises verifying the data trust assurance level (TdL).

7. First method (1) according to any of the preceding claims 3 to 6, wherein said first method (1) further comprises:
- requesting by said application host (App_H) to said data attester device (dAtt) to update said data ledger (LdG) for said group of data (G), said request comprising a transaction (TrS) comprising information (InF) on said operation (Op), on the last data attestation (Att_D), on a new data attestation (nAtt_D), and on metadata (MtD),
- updating by said data attester device (dAtt) said data ledger (LdG) with said information (InF), and
- acknowledging by said data attester device (dAtt) to said application host (App_ H) said update.

8. First method (1) according to the preceding claim, wherein said metadata (MtD) comprises ownership information (OwL) and access control rules (AcC).

9. First method (1) according to any of the preceding claims, wherein said operation (Op) is of the type:
- a CRUD operation, or
- an encryption operation (Op.2), or
- a decryption operation (Op.3), or
- a transfer operation (Op.4), or
- a storage operation (Op.5).

10. First method (1) according to any of the preceding claims, wherein said group of data (G) comprises one data or a plurality of data.

11. Second method (2) for processing a group of data (G) with an operation (Op) within a runtime environment (e1), wherein said second method (2) comprises:
- requesting by an application host (App_H) a runtime environment attester device (eAtt) for an attestation report (Att_R), said runtime environment attester device (eAtt) being part of said runtime environment (e1),
- requesting by said application host (App_H) a verifier device (VeR) to verify said attestation report (Att_R),
- receiving by said application host (App_H) from said verifier device (VeR) a runtime proof token (Tk),
- requesting by said application host (App_H) a data attester device (dAtt) for a data attestation (Att_D), said request comprising a group data identifier (IdG) and said runtime proof token (Tk),
- receiving by said application host (App_H) a data attestation (Att_D) from said data attester device (dAtt) after said runtime proof token (Tk) has been assessed,
- verifying by said application host (App_H) data constraints (Cs) based on said data attestation (Att_D),
- upon said verification, processing by said application host (App_H) said group of data (G) with said operation (Op).

12. Second method (2) according to the preceding claim, wherein said step of requesting an attestation report (Att_R) comprises the sub-steps of:
- requesting by said application host (App_H) said runtime environment attester device (eAtt) for a quote report (QR),
- receiving back by said application host (App_H) said quote report (QR),
- requesting by said application host (App_H) said verifier device (VeR) for a nonce (N),
- receiving back by said application host (App_H) said nonce (N), and
- transmitting by said application host (App_H) to said runtime environment attester device (eAtt) said nonce (N).

13. Second method (2) according to claim 11 or claim 12, wherein said second method (2) further comprises:
- requesting by said application host (App_H) said data attester device (dAtt) to update said data ledger (LdG) for said group of data (G), said request comprising a transaction (TrS) comprising information (InF) on said operation (Op), on the last data attestation (Att_D), on a new data attestation (nAtt_D), and on metadata (MtD).

14. Third method (3) for acquiring a data attestation (Att_D) for a group of data (G), said third method (3) comprising:
- receiving by a data attester device (dAtt) from an application host (App_H) a request (Rq1) for a data attestation (Att_D), said request (Rq1) comprising a group data identifier (IdG) and a runtime proof token (Tk),
- assessing by said data attester device (dAtt) said runtime proof token (Tk),
- upon said assessment, acquiring by said data attester device (dAtt) a data attestation (Att_D),
- sending back by said data attester device (dAtt) to the application host (App_H) said data attestation (Att_D).

15. Fourth method (4) for verifying integrity of an application (App), said fourth method (4) comprising:
- receiving by a verifier device (VeR) from an application host (App_H) a request for verifying an attestation report (Att_R),
- verifying by said verifier device (VeR) said attestation report (Att_R),
- upon said verification, sending back by said verifier device (VeR) to said application host (App_H) a runtime proof token (Tk).
